## Europäisches Patentamt
## European Patent Office
## Office européen des brevets

(11) Publication number: **0 175 374**
**B1**

(12) **EUROPEAN PATENT SPECIFICATION**

(45) Date of publication of patent specification: **12.04.89**

(21) Application number: **85111901.6**

(22) Date of filing: **20.09.85**

(51) Int. Cl.⁴: **F 25 B 13/00,** F 25 B 41/04

(54) **Reversing valve assembly.**

(30) Priority: **20.09.84 US 652833**

(43) Date of publication of application:
**26.03.86 Bulletin 86/13**

(45) Publication of the grant of the patent:
**12.04.89 Bulletin 89/15**

(84) Designated Contracting States:
**DE FR GB IT SE**

(56) References cited:
**EP-A-0 089 788**
**US-A-2 991 631**
**US-A-4 248 058**

(73) Proprietor: **RANCO INCORPORATED OF DELAWARE**
**555 Metro Place North Suite 550**
**Dublin Ohio 43017 (US)**

(72) Inventor: **Marks, Robert T.**
**3312 Ridgewood Drive**
**Columbus Ohio 43220 (US)**

(74) Representative: **Lehn, Werner, Dipl.-Ing. et al**
**Hoffmann, Eitle & Partner Patentanwälte**
**Arabellastrasse 4**
**D-8000 München 81 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to refrigerant reversing valve assemblies and more particularly to refrigerant reversing valve assemblies including integral solenoid operated pilot valves for controlling operation of the refrigerant reversing valves. From EP—A—0 089 788 a refrigerant reversing valve assembly is known which includes a refrigerant reversing valve including a fluid pressure actuable reversing valving member for reversing the direction of refrigerant flow in a refrigeration system; a pilot valve unit for controlling actuation of said valving member comprising a pilot valve housing in fluid communication with said reversing valving member, an actuable pilot valving member in said housing, and pilot valve actuating means comprising a pilot valving member actuating plunger coupled to the pilot valving member, a guide tube surrounding said plunger connected to said pilot valve housing and projecting therefrom, and a solenoid surrounding said guide tube for actuating said plunger; and supporting means for inter-connecting said reversing valve and said pilot valve unit.

Refrigerant flow reversing valves are widely used in refrigeration systems, such as heat pump units, where the flow direction of refrigerant through system heat exchangers is periodically reversed. The refrigerant flow reversing valves have commonly been operated by fluid pressure to reverse the refrigerant flow direction. Typically a fluid pressure controlling pilot valve unit was attached to the refrigerant reversing valve to form a refrigerant reversing valve assembly which was installed as a unit in the refrigeration system.

The pilot valve units include a pilot valve for supplying actuating fluid pressure to the reversing valve and an electric pilot valve actuator. The pilot valves have generally been multi-way, two position valves formed by a pilot valve housing containing a pilot valving member. The pilot valves supplied actuating refrigerant pressure to desired reversing valve housing locations depending on the pilot valve position.

Pilot valve actuators commonly included a solenoid having a plunger-like armature for shifting the pilot valving member and a solenoid coil for moving the plunger or armature. The plunger was mechanically connected to the pilot valving member and projected from the pilot valve housing within a sealed plunger guide tube. The guide tube was hermetically joined to the pilot valve housing and projected away from the valve housing for receiving and supporting the solenoid coil. In most constructions the guide tube had a hermetically closed projecting end region in which a plunger biasing spring was supported.

Pilot valve solenoids were usually constructed from a cylindrically wound coil encapsulated by dielectric plastic material to form a generally cylindrical body having a central cylindrical plunger guide tube receiving bore. The solenoid bore was sized to provide a snug yet slip fitting clearance with the guide tube. The solenoid body was tightly embraced by a generally rectangular metal framework covering both ends of the coil body and extending along diametrically opposed body sides. The framework served primarily to establish a flux path about the solenoid while incidentally providing some physical protection for the coil body. The framework was permanently assembled to the coil body and provided, in some cases, a structure for connection to the plunger guide tube.

The pilot valve housing was rigidly connected to the reversing valve by a bracket. The plunger guide tube projected away from the pilot valve housing and the mounting bracket to receive and support the solenoid coil body. The guide tube constructions carried a threaded stud at one end which projected through a conforming opening in the framework so that by threading a nut onto the guide tube stud the coil body and framework could be secured in place on the guide tube.

Although the prior art refrigerant reversing valve assemblies provided for effective, reliable reversing valve operation there were some drawbacks attendant the designs. Because the plunger guide tube supported the coil body and framework, the guide tube necessarily projected from the pilot valve housing and from the support bracket in cantilever fashion. Accordingly, the guide tube was subject to damage from impacts and more gradually applied bending loads. During the manufacturing process, as a result of handling, and during shipment, the guide tubes were occassionally subjected to forces sufficient to crimp or collapse the guide tubes enough to prevent movement of the pilot valve plunger.

The same disadvantage was obtained after the reversing valve assembly was installed in a heat pump unit with the solenoid in place. If the solenoid or its framework was struck with a tool or was otherwise subjected to a load of some sort, the guide tube could experience excessive bending stress and crimp or collapse thus wedging the plunger in place so that the pilot valve could not be operated. The kind of damage referred to was, for all intents and purposes, fatal to the reversing valve assembly and was more likely to occur after assembly of the solenoid to the pilot valve than prior to the assembly.

Secondly, the construction of the solenoid framework and its assembly to the solenoid body required a substantial number of manufacturing operations, yet did not provide for highly efficient magnetic coupling between the coil and the armature plunger. Furthermore the framework limited the orientation of the solenoid with respect to the reversing valve when the assembly was completed. That is to say, the solenoid coil was encapsulated with the lead wires projecting from the solenoid in a particular direction. Once a solenoid was assembled in its framework that solenoid could only be placed on a guide tube in a single orientation with respect to the reversing valve assembly. Depending on the particular installation, the coil leads could sometimes interfere with adjacent parts and equipment.

The object of the present invention is to provide an improved refrigerant reversing valve assembly with a simplified structure which protects the pilot valve plunger tube from damage. The object of the present invention is solved by a supporting structure which connects the pilot valve unit to the reversing valve housing and includes an anchoring panel rigidly fixed with respect to said reversing valve and rigidly fixed to said pilot valve housing for securing said reversing valve and said pilot valve unit together with said plunger guide tube projecting away from said anchoring panel in a first direction, a rigid retainer panel detachably connected to the guide tube projecting end region remote from said anchoring panel, said retainer panel being detachable to enable placement and maintenance of said solenoid in position with respect to said guide tube between said panels; and coupling means engaged between said anchoring panel and said retainer panel for protecting said guide tube.

In one preferred embodiment of the invention the new supporting structure includes coupling panels rigidly extending between anchoring and retainer panels to protect the guide tube from impacts and bending loads.

In a further embodiment of the invention the anchoring and retainer panels each include a fixed solenoid supporting hub surrounding the guide tube and extending into the solenoid. The solenoid is thus suspended between the panel hubs rather than being supported by the guide tube itself.

The panel hubs and their associated panels form pole pieces for the solenoid, and, with the coupling panels, serve to direct and conduct flux in a highly efficient manner about the solenoid. The hubs so significantly improve the magnetic coupling between the support structure panels and the solenoid that relatively smaller, lower current solenoids have been found to operate the pilot valve as effectively as the larger, higher current solenoids employed with the prior art pilot valves.

In a reversing valve assembly employing a pilot valve unit mounting structure constructed according to the invention the anchoring panel and the coupling panels are formed from a continuous sheet metal body with one coupling panel welded to the reversing valve housing, the anchoring panel extending transversely away from the coupling panel and the second coupling panel extending from the anchoring panel generally parallel to the first coupling panel so that the armature guide tube extends between and is protected by the coupling panels. The retainer panel is secured to the guide tube in firm engagement with the coupling panels to assure a rigid enclosure for the solenoid and an efficient solenoid flux conducting path.

Other features and advantages of the invention will become apparent from the following detailed description of a preferred embodiment of the invention made with reference to the accompanying drawings which form part of the specification, and in which:

Figure 1 is an elevational view of a reversing valve assembly constructed according to the invention;

Figure 2 is a view seen approximately from the place indicated by the line 2—2 of Figure 1;

Figure 3 is a view seen approximately from the plane indicated by the line 3—3 of Figure 1 with parts broken away; and,

Figure 4 is a view similar to Figure 1 with parts illustrated in cross section and parts removed.

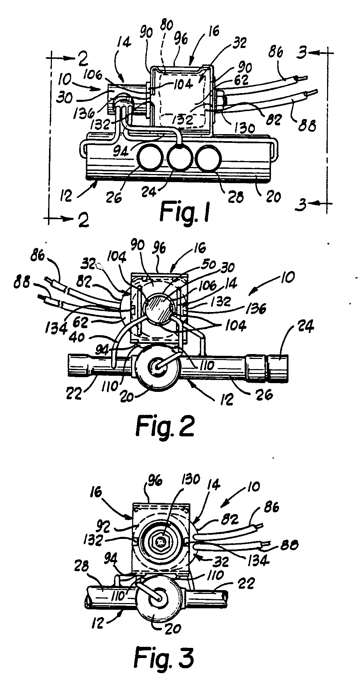

A refrigerant reversing valve assembly 10 constructed according to the present invention is illustrated by Figure 1 of the drawings and includes a refrigerant reversing valve, generally indicated by the reference character 12, a pilot valve unit 14 for governing operation of the refrigerant reversing valve 12, and supporting structure 16 for interconnecting the reversing valve 12 and the pilot valve unit 14. The reversing valve assembly 10 is of the sort which is installed in a refrigeration system, such as a heat pump unit, for reversing the direction of refrigerant flow through system heat exchangers and thereby changing the refrigeration system mode of operation from one which functions to cool indoor air to one in which the indoor air is heated. Heat pump units are widely known and therefore drawings and further description of the refrigerant system with which the assembly 10 is associated are omitted for brevity.

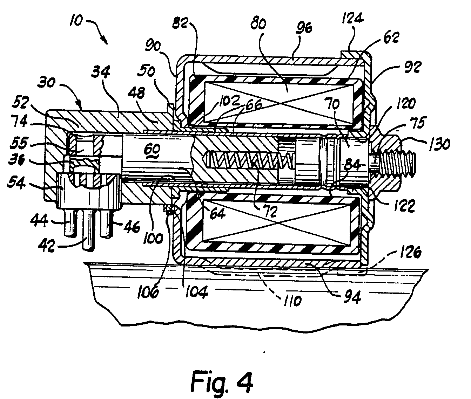

The refrigerant reversing valve 12 comprises a tubular generally cylindrical valve housing 20, hermetically closed at both ends, which communicates with the refrigeration system by way of a compressor discharge tube 22 (Figures 2 and 3), a compressor intake tube 24 and refrigerant flow tubes 26, 28. The valve housing 20 contains a two position reversing valving member (not illustrated) shiftable between alternative positions within the valve housing to effect reversal of the system refrigerant flow in the manner referred to above. The reversing valve 12 can be of any suitable or conventional construction and therefore is not described or illustrated in detail. The preferred and illustrated valve is constructed like the valve disclosed by our copending European Patent Application No. 85109920.0 filed August 7, 1985, the disclosure of which is hereby incorporated herein.

In one valving member position the refrigerant flowing from the compressor discharge into the valve housing 20 via the tube 22 exits the housing via the flow tube 26 while refrigerant returning to the valve housing 20 from the system flows through the tube 28 and back to the compressor intake via the outlet tube 24. When the valving member is in its alternative position, the compressor discharge refrigerant flows to the valve housing 20 via the tube 22 and exists to the system via the tube 28 while the refrigerant returning from the system to the valve housing 20 flows through the tube 26 and returns to the compressor intake via the tube 24.

The refrigerant reversing valve 12 is operated between its alternative refrigerant flow directing conditions by the pilot valve unit 14. The reversing valving member is moved in the valve housing 20 in response to applied differential actuating pressures supplied to the housing 20 by the pilot valve unit 14. The illustrated pilot valve unit 14 comprises a pilot valve 30 and a pilot valve actuator 32. The pilot valve 30 is preferably a two position four way valve arranged for controlling the actuating pressure supplied to the valve housing 20 for controlling the operational mode of the refrigeration system via the refrigerant reversing valve 12. The actuator 32 in turn controls the pilot valve position.

Referring to Figure 4 the pilot valve 30 comprises a valve housing 34 containing a pilot valving member 36 which is movable between alternative positions within the housing 34. The valve housing 34 communicates with refrigerant at the compressor discharge pressure via a capillary tube 40 (see Figure 2) hermetically joined to the housing 34 and to the inlet tube 22. The valve housing 34 communicates with the compressor suction pressure via a suction pressure capillary tube 42 hermetically joined between the housing 34 and the outlet tube 24. Discharge and suction pressure levels are distributed to the reversing valve housing 20 via capillary tubes 44, 46 extending between the pilot valve housing 34 and respective opposite ends of the reversing valve housing.

The housing 34 is preferably a tubular cylindrical member defining an internal chamber having an open end region 48 surrounded by an annular mounting flange 50 and an opposite closed end region 52. An integral pilot valve seat 54 is disposed adjacent the closed end region and defines ports within the valve housing 34 communicating respectively with the capillary tubes 42, 44, 46. The tube 40 communicates with the pilot valve housing chamber at a location spaced from the valve seat 54 so that the valve housing chamber is constantly maintained at the compressor discharge pressure.

The pilot valving member 36 is preferably formed by a cylindrical button-like element defining a valving cavity dimensioned to extend over and communicate the intake tube 42 with either the capillary tube 44 or the capillary tube 46 depending upon the pilot valving member position. A cylindrical lug 55 projects from the valving member in a direction away from the seat 54.

The pilot valve actuator 32 moves the pilot valving member between its alternative positions and in the preferred embodiment comprises a valving member actuating plunger assembly 60 mechanically attached to the valving member and a solenoid 62 for operating the plunger assembly. The pilot valving member is in one position when the solenoid is energized and in the alternative position when the solenoid 62 is de-energized.

The plunger assembly 60 includes a plunger 64 formed by solenoid armature element, a guide tube 66 for the plunger 64, a guide tube cap 70 for closing the end of the guide tube opposite the pilot valve housing and locating the plunger 64 axially relative to the guide tube, and a biasing spring 72 reacting between the guide tube cap and the plunger for biasing the pilot valving member to one position when the solenoid 62 is de-energized.

The plunger 64 is formed by a generally cylindrical member constructed from ferrous material and slidably disposed in the tube 66. The plunger is mechanically linked to the pilot valving member via a valving member supporting cross bore 74 which receives the valving member lug 55.

The guide tube 66 is a straight cylindrical thin walled tube having one end extending into the open end of the pilot valve housing where the guide tube end is hermetically attached to the pilot valve housing. The guide tube extends cantilever fashion from the valve housing with its opposite end hermetically closed by the tube cap 70.

The tube cap 70 is a generally cylindrical plug-like member conforming to the inside of the guide tube 66. An integral screw threaded stud 75 projects away from the tube cap 70 beyond the guide tube end. The cap 70 is preferably welded and crimped in place in the tube 66 to provide a structurally strong hermetic joint between the cap and the tube.

The biasing spring 72 is preferably a helical coil compression spring which reacts between the tube cap 70 and the plunger 64. In the illustrated pilot valve unit, the plunger 64 is provided with a spring receiving cavity extending along the plunger axis for maintaining the biasing spring in alignment with the plunger and the tube cap.

The solenoid 62 is formed by a helically wound wire coil 80 encapsulated within a plastic or similar dielectric moldable material to form a generally cylindrical body 82 having a central bore-like through opening 84 for receiving the guide tube 66. The opposite ends of the coil wire are connected to a pilot valve energizing circuit (not illustrated) by coil leads 86, 88, respectively, extending from the coil through the body 82.

The pilot valve unit support structure 16 is constructed and arranged to structurally interconnect the pilot valve unit 14 and the reversing valve 12 while supporting the solenoid and protecting the plunger guide tube 66 against damage both during production of the reversing valve assembly and after its installation. In the illustrated embodiment the support structure 16 includes an anchoring panel 90 projecting from the reversing valve housing 20 for rigidly securing the pilot valve unit in position with respect to the reversing valve, a detachable retainer panel 92 spaced from the anchoring panel 90 for maintaining the solenoid 62 properly assembled to the pilot valve unit and coupling panels 94, 96 extending between the anchoring and retainer panels.

The anchoring panel 90 is formed by a generally rectangular sheet metal body defining a generally circular centralized opening 100 surrounding the open end of the pilot valve body with the guide tube 66 projecting through the opening. A generally cylindrical flanged hub 102 is press fit into the opening 100 and extends generally from the plane of the anchoring panel 90 snugly about the guide tube 66. The preferred hub 102 forms a cylindrical internal opening which is slidable over and disposed in close proximity to the guide tube surface.

Axially extending tongues 104 are formed at spaced locations around the opening 100 and extend axially into respective mounting notches 106 formed at corresponding circumferential locations in the pilot valve unit housing mounting flange 50. The tongues 104 are expanded into engagement with the edges of the mounting notches 106 by staking so that the anchoring panel and pilot valve housing are rigidly secured together.

In the preferred and illustrated embodiment of the invention the coupling panels 94, 96 are formed continuously with the anchoring panel 90 from a common sheet metal stamping. The coupling panels extend at right angles from opposite sides of the anchoring panel 90 along the length of the guide tube and parallel to it. Each coupling panel has a generally rectangular shape.

The coupling panel 94 extends along the reversing valve housing and is formed with two embossed longitudinal ribs 110 which engage the reversing valve housing along circumferentially spaced longitudinally extending areas. The ribs 110 are preferably fixed to the reversing valve housing by spot welds (not shown) which serve to assure a rigid high strength connection between the structure 16 and the reversing valve.

The illustrated coupling panel 96 is generally planar except for a pair of stiffening skirts along its opposite sides which are formed by panel sections bent toward the panel 94. The coupling panels 94, 96 extend parallel to each other on opposite sides of the plunger guide tube with the coupling panels being spaced sufficiently apart to enable the solenoid 62 to be easily assembled onto the guide tube between them.

The retainer panel 92 is a generally rectangular sheet metal member detachably secured to the guide tube cap stud 75. The retainer panel forms a generally centralized guide tube opening 120 with a solenoid supporting hub 122 projecting from the opening 120 along the guide tube towards the anchoring panel 90. The illustrated hub 122 is formed continuously with the material of the retainer panel and has a cylindrical inner surface which is sized to slide easily over the guide tube opening and within the central, through opening of the solenoid 62. The panel side adjacent the coupling panel 96 is formed with a mounting flange 124 which extends a short distance along the coupling panel 96 when the retainer panel is attached to the guide tube. The opposite retainer panel end is provided with mounting tongues 126 which extend a short distance along the coupling panel 94. The retainer panel is secured in place to the guide tube 66 and coupling panels by a retainer nut 130 which is threaded onto the guide tube cap stud and urges the retainer panel into engagement with the coupling panels 94, 96.

During manufacture of the reversing valve assembly 10 prior to assembly of the solenoid 62 and retainer panel 92, the anchoring panel 90 and coupling panels 94, 96 serve to protect the guide tube 66 from damage which might otherwise occur during handling. Should the partially assembled reversing valve assembly be dropped or otherwise struck, the coupling panels projecting on opposite sides of the guide tube 66 effectively prevent the guide tube from sustaining impact loads which might otherwise crimp or buckle the guide tube.

When the solenoid 62 has been assembled to the valve assembly and the retainer panel 92 is secured in place the solenoid is supported on and extends between the anchoring and retainer panel hubs. The structure 16 is quite rigid and thus the support of the solenoid 62 is borne solely by the structure 16 and not by the guide tube extending through it. Thus if the solenoid is subjected to impacts or other loads which might otherwise result in bending the guide tube, the loads are worn by the structure 16 to effectively isolate the guide tube from all bending moments.

The components of the structure 16 are formed by magnetically permeable materials so that the hubs 102, 122 and their associated anchoring and retainer panels, respectively, form pole pieces for the solenoid while the coupling panels provide a highly conductive and flux path around the solenoid between the poles. The magnetic coupling between the hubs and the solenoid is highly efficient and it has been found that, utilizing the structure 16 for mounting a pilot valve unit to a reversing valve, smaller, less costly solenoids can be employed compared to those required by the prior art constructions referred to.

The new connecting structure 16 further provides for mounting the solenoid 62 in any of several different orientations with respect to the reversing valve. As illustrated by the drawings, the panels 90, 92 are each provided with notches 132, 134 respectively, on each of their sides. The solenoid body 82 is provided with a single molded in mounting tab 136 which, depending upon the orientation of the solenoid with respect to the structure 16, extends through one of the mounting notches 132, 134 in one of the anchoring or retainer panels.

As illustrated by the drawings the coil leads 86, 88 are molded into the solenoid body and extend from the body at an angle with respect to the solenoid body axis. The structure 16 allows the solenoid body to be placed on the guide tube with the leads extending from either side of the structure 16 between the coupling panels 94, 96 as may be desired for the particular installation in which the reversing valve assembly is to be used. For example, the valve assembly 10 of Figures 1—3 is illustrated with the solenoid body tab 136 engaged in the anchoring panel notch 132. In this orientation the leads 86, 88 project away from the assembly beyond the adjacent end of the valve housing 20 in the direction of the discharge flow tube 22. By reassembling the solenoid body to the guide tube with the solenoid body rotated 180° about the guide tube, the leads extend in the direction of the flow tubes 24, 26, 28 with the tab 136 engaged in the anchoring panel notch 134. By turning the solenoid body end for end, the coil leads can be oriented to extend out of either side of the structure 16 in generally opposite directions with the tab 136 engaged in either the notch 132 or the notch 134 of the retainer panel. The relationship between the tab 136 and the notches 132, 134 provides for assembly of the solenoid body in a manner fixed against rotation with respect to the structure 16.

While a single embodiment of a preferred form of the invention has been illustrated and described herein, in considerable detail the present invention is not to be considered limited to the precise construction shown.

## Claims

1. A refrigerant reversing valve assembly including:

a) a refrigerant reversing valve (12) including a fluid pressure actuable reversing valving member for reversing the direction of refrigerant flow in a refrigeration system;

b) a pilot valve unit (14) for controlling actuation of said valving member comprising a pilot valve housing (34) in fluid communication with said reversing valving member, an actuable pilot valving member (36) in said housing, and pilot valve actuating means (32) comprising a pilot valving member actuating plunger (64) coupled to the pilot valving member (36), a guide tube (66) surrounding said plunger (64) connected to said pilot valve housing (34) and projecting therefrom, and a solenoid (62) surrounding said guide tube (66) for actuating said plunger (64); and

c) supporting means (16) for interconnecting said reversing valve (12) and said pilot valve unit (14), characterized in that said supporting means (16) includes:

i) an anchoring panel (90) rigidly fixed with respect to said reversing valve (12) and rigidly fixed to said pilot valve housing (34) for securing said reversing valve (12) and said pilot valve unit (14) together with said plunger guide tube (66) projecting away from said anchoring panel (90) in a first direction,

ii) a rigid retainer panel (92) detachably connected to the guide tube (66) projecting end region remote from said anchoring panel (90), said retainer panel (92) being detachable to enable placement and maintenance of said solenoid (62) in position with respect to said guide tube (66) between said panels (90, 92); and

iii) coupling means engaged between said anchoring panel (90) and said retainer panel (92) for protecting said guide tube (66).

2. A reversing valve assembly as claimed in claim 1, wherein said coupling means include hub element (102, 122) located in said panels and extending along said guide tubes (66) and within said solenoid (62) so that said solenoid is supported between said panels (90, 92) upon said hub elements (102, 122).

3. A reversing valve as claimed in claim 1 wherein said coupling means include coupling panels (94, 96) extending between said anchoring and retainer panels, said coupling panels extending generally parallel to each other and to said guide tube.

4. A reversing valve assembly as claimed in claims 2 or 3 wherein said anchoring panels and retainer panels (90, 92), and said hubs (102, 122) are formed from magnetically permeable materials to form solenoid pole pieces and said coupling panels defining magnetic flux paths between the pole pieces.

5. A reversing valve assembly as claimed in claim 1 wherein said reversing valve (12) further comprises a reversing valve housing (20) for said reversing valving member and said anchoring panel (90) is connected to said reversing valve housing (20) by a weld joint.

6. A reversing valve assembly as claimed in claim 2 wherein said coupling panels (94, 96) are formed continuously with said anchoring panel (90).

7. A reversing valve assembly as claimed in claim 6 wherein said reversing valve (12) further includes a reversing valve housing (20) for said reversing valving member and one of said coupling panels extends along and is fixed to said housing.

8. A reversing valve assembly as claimed in claim 3 wherein said coupling panels (94, 96) are formed continuously with one of said anchoring and retainer panels and extend along opposite sides of said solenoid into engagement with the other of said anchoring and retainer panels.

9. A reversing valve assembly as claimed in claim 8 wherein said coupling panels are formed continuously with said anchoring panel and said retainer panel defines flanges projecting from said retainer panel toward said anchoring panel, said flanges engaging said coupling panels.

10. A valve assembly as claimed in claim 2 and further comprising coupling panel members (94, 96) extending between said anchoring (90) and retainer panels (92), said coupling panels being rigidly supported with respect to said pilot valve unit (14) and extending generally parallel to each other and to said guide tube.

11. A reversing valve assembly as claimed in claim 3 wherein said anchoring panel (90) and said retainer panel (92) each includes a projecting hub (102, 122) disposed about said guide tube and extending along said guide tube into said solenoid (62).

## Patentansprüche

1. Ventilanordnung zur Kühlmittelumsteuerung, mit

a) einem Kühlmittel-Umsteuerventil (12) mit einem Venteil, das über den Strömungsmitteldruck betätigbar ist und die Strömungsrichtung des Kühlmitteles in einer Kühlanlage umkehrt;

b) einem Hilfssteuerventil zum Steuern der Betätigung des Venteils, welches ein Ventilgehäuse (34) aufweist, das mit dem Umkehrventilteil in Strömungsverbindung steht, mit einem betätigbaren Hilfssteuerventilteil (36) in dem Gehäuse, und mit einer Betätigungseinrichtung (32) für das Hilfssteuerventilteil, wobei die Betätigungseinrichtung zur Betätigung des Hilfssteuerventilteils einen Druckkolben (64) aufweist, der mit dem Hilfssteuerventilteil (36) verbunden ist, und ferner ein den Druckkolben umgebendes Führungsrohr (66), welches mit dem Hilfssteuerventil verbunden ist und über dieses hinaussteht, und schießlich einen Elektromagneten (62), welcher das Führungsrohr (66) umgibt und zur Betätigung des Druckkolbens (64) vorgesehen ist; und

c) mit einer Stützeinrichtung (16) zur Verbindung zwischen dem Umsteuerventil (12) und dem Hilfssteuerventil (14), dadurch gekennzeichnet, daß die Stützeinrichtung (16) folgende Bauteile aufweist:

I. eine starr gegenüber dem Umsteuerventil (12) und starr an dem Gehäuse (34) für das Hilfssteuerventil befestigte Verankerungsplatte (90) zur Befestigung des Umsteuerventils (12) und des Hilfssteuerventils (14) neben dem Führungsrohr (66) für den Druckkolben, welches sich von der Verankerungsplatte (90) in einer ersten Richtung weg erstreckt,

II. eine starre Sicherungsplatte (92), die lösbar mit dem der Verankerungsplatte (90) gegenüberliegenden und überstehenden Endbereich des Führungsrohrs (66) verbunden ist, wobei die Sicherungsplatte (92) lösbar so angebracht ist, daß die Anordnung des Elektromagneten (62) und dessen Sicherung in korrekter Lage gegenüber dem Führungsrohr (66) zwischen den Platten (90, 92) möglich ist; und

III. eine zwischen der Verankerungsplatte (90) und der Sicherungsplatte (92) in Eingriff stehende Verbindungseinrichtung zum Schutz des Führungsrohres (66).

2. Umsteuerventilanordnung nach Anspruch 1, dadurch gekennzeichnet, daß die Verbindungseinrichtung ein in den Platten angeordnetes Nabenteil (102, 122) aufweist, welches sich entlang des Führungsrohres (66) und im Elektromagneten (62) in der Weise erstreckt, daß der Elektromagnet zwischen beiden Platten (90, 92) auf den Nabenelementen (102, 122) gelagert ist.

3. Umsteuerventilanordnung nach Anspruch 1, dadurch gekennzeichnet, daß die Verbindungseinrichtung Verbindungsplatten (94, 96) umfaßt, die sich zwischen der Verankerungsplatte und der Sicherungsplatte erstrecken und im allgemeinen parallel zueinander und zum Führungsrohr verlaufen.

4. Umsteuerventilanordnung nach Anspruch 2 oder 3, dadurch gekennzeichnet, daß die Verankerungsplatten und Sicherungsplatten (90, 92) und die Naben (102, 122) magnetisch durchlässigen Werkstoffen hergestellt sind und Polstücke für den Elektromagneten bilden, während die Verbindungsplatten die Magnetflußlinien zwischen den Polstücken festlegen.

5. Umsteuerventilanordnung nach Anspruch 1, dadurch gekennzeichnet, daß das Umsteuerventil (12) des weiteren ein Gehäuse (20) für das Umsteuerventilteil aufweist, und daß die Verankerungsplatte (90) mit dem Gehäuse (20) für das Umsteuerventilteil über eine Schweißverbindung verbunden ist.

6. Umsteuerventilanordnung nach Anspruch 2, dadurch gekennzeichnet, daß die Verbindungsplatten (94, 96) zusammenhängend mit der Verankerungsplatte (90) ausgebildet sind.

7. Umsteuerventilanordnung nach Anspruch 6, dadurch gekennzeichnet, daß das Umsteuerventil außerdem ein Gehäuse (20) für das Umsteuerventilteil aufweist, und daß eine der Verbindungsplatten sich entlang dieses Gehäuses erstreckt und an diesem befestigt ist.

8. Umsteuerventilanordnung nach Anspruch 3, dadurch gekennzeichnet, daß die Verbindungsplatten 94, 96 zusammenhängend mit einer der Verankerungs- und Sicherungsplatten ausgebildet sind und sich entlang gegenüberliegender Seiten des Solenoids in Eingriff mit der anderen der Verankerungs- und Sicherungsplatte erstrecken.

9. Umsteuerventilanordnung nach Anspruch 8, dadurch gekennzeichnet, daß die Verbindungsplatten (94, 96) zusammenhängend mit der Verankerungsplatte ausgebildet sind, und daß die Sicherungsplatte Flansche aufweist, die von ihr weg zur Verankerungsplatte hin vorspringen und mit den Verbindungsplatten in Eingriff stehen.

10. Umsteuerventilanordnung nach Anspruch 2, dadurch gekennzeichnet, daß sie Verbindungsplattenteile (94, 96) aufweist, die sich zwischen der Verankerungsplatte (90) und der Sicherungsplatte (92) erstrecken und gegenüber dem Hilfssteuerventil (14) starr gelagert sind, wobei sie sich im allgemeinen parallel zueinander und zum Führungsrohr erstrecken.

11. Umsteuerventilanordnung nach Anspruch 3, dadurch gekennzeichnet, daß die Verankerungsplatte (90) und die Sicherungsplatte (92) jeweils eine vorstehende Nabe (102, 122) aufweisen, die um das Führungsrohr herum angeordnet ist und sich entlang desselben in den Elektromagneten (62) erstreckt.

**Revendications**

1. Ensemble pour vanne d'inversion de réfrigérant comprenant:

a) une vanne d'inversion de réfrigérant (12) comprenant un organe obturateur d'inversion manoeuvrable par un fluide sous pression pour inverser le sens du courant de réfrigérant dans un système de réfrigération;

b) une unité (14) à vanne pilote pour commander le fonctionnement de cet organe d'obturation, comprenant un corps (34) de vanne pilote en communication fluidique avec ledit organe obturateur d'inversion, un organe (36) obturateur pilote mobile dans ce corps, et des moyens (32) de manoeuvre de la vanne pilote comprenant un plongeur (64) manoeuvrant l'organe obturateur pilote accouplé à cet organe obturateur pilote (36), un tube de guidage (66) entourant ce plongeur (64) et accouplé à ce corps (34) de vanne pilote et se projetant à partir de celui-ci, et un solénoïde (62) entourant ce tube de guidage (66) pour manoeuvrer le plongeur (64), et

c) des moyens porteurs (16) pour interconnecter ladite vanne d'inversion (12) et ladite unité (14) à vanne pilote, caractérisé en ce que les moyens porteurs (16) comprennent:

i) un panneau d'ancrage (90) fixé rigidement par rapport à la vanne d'inversion (12) et fixé rigidement au corps (34) de la vanne pilote pour fixer ensemble cette vanne d'inversion (12) et cette unité (14) à vanne pilote avec le tube de guidage (66) du plongeur se projetant en s'éloignant du panneau d'ancrage (90) dans une première direction,

ii) un panneau rigide de retenue (92) réuni de manière détachable à l'extrémité saillante du tube de guidage (66) éloignée du panneau d'ancrage (90), ce panneau de retenue (92) étant détachable pour permettre la mise en place et l'entretien du solénoïde (62) en position par rapport au tube de guidage (66) entre lesdits panneaux (90, 92), et

iii) des moyens d'accouplement engagés entre le panneau d'ancrage (90) et le panneau de retenue (92) pour protéger le tube de guidage (66).

2. Ensemble à vanne d'inversion selon la revendication 1, dans lequel les moyens d'accouplement comprennent un moyen (102, 122) situé sur lesdits panneaux et s'étendant le long du tube de guidage (66) à l'intérieur du solénoïde (62), de sorte que ce dernier est supporté entre les panneaux (90, 92) par lesdits moyens (102, 122).

3. Vanne d'inversion selon la revendication 1, dans laquelle les moyens d'accouplement comprennent des panneaux d'accouplement (94, 96) s'étendant entre les panneaux d'ancrage et de retenue, ces panneaux d'accouplement s'étendant parallèlement dans l'ensemble l'un à l'autre et au tube de guidage.

4. Ensemble à vanne d'inversion selon la revendication 2 ou 3, dans lequel les panneaux d'ancrage et de retenue (90, 92) et lesdits moyeux (102, 122) sont réalisés en matières perméables magnétiquement pour constituer les pièces polaires du solénoïde et lesdits panneaux d'accouplement définissent des chemins de flux magnétiques entre les pièces polaires.

5. Ensemble à vanne d'inversion selon la revendication 1, dans lequel la vanne d'inversion (12) comprend en plus un corps (20) de vanne d'inversion pour ledit organe obturateur d'inversion et le panneau d'ancrage (90) est réuni à ce corps (20) de la vanne d'inversion par une soudure.

6. Ensemble à vanne d'inversion selon la revendication 2, dans lequel les panneaux d'accouplement (94, 96) sont réalisés de manière continue avec les panneaux d'ancrage (90).

7. Ensemble à vanne d'inversion selon la revendication 6, dans lequel la vanne d'inversion (12) comprend en plus un corps (20) de vanne d'inversion pour ledit organe obturateur d'inversion et l'un des panneaux d'accouplement s'étend le long de ce corps auquel il est fixé.

8. Ensemble à vanne d'inversion selon la revendication 3, dans lequel les panneaux d'accouplement (94, 96) sont formés de manière continue avec l'un des panneaux d'ancrage et de retenue et s'étendent le long de côtés opposés du solénoïde en état d'engagement avec l'autre desdits panneaux d'ancrage et de retenue.

9. Ensemble à vanne d'inversion selon la revendication, dans lequel les panneaux d'accouplement sont formés de manière continue avec le panneau d'ancrage et le panneau de retenue a des brides se projetant à partir de ce panneau de retenue en direction du panneau d'ancrage, ces brides s'engageant avec les panneaux d'accouplement.

10. Ensemble à vanne selon la revendication 2 et comprenant en outre des panneaux d'accouplement (94, 96) s'étendant entre les panneaux d'ancrage (90) et de retenue (92), ces panneaux d'accouplement étant supportés rigidement par rapport à l'unité (14) à vanne pilote et s'étendant parallèlement dans l'ensemble l'un à l'autre et au tube de guidage.

11. Ensemble à vanne d'inversion selon la revendication 3, dans lequel le panneau d'ancrage (90) et le panneau de retenue (92) comprennent chacun un moyen saillant (102, 122) disposé autour du tube de guidage et s'étendant le long de ce tube à l'intérieur du solénoïde (62).

Fig. 1

Fig. 2

Fig. 3

Fig. 4